# EUROPÄISCHE PATENTANMELDUNG

(11) **EP 1 388 957 A1**
(43) Veröffentlichungstag der Anmeldung: **11.02.2004**
(21) Anmeldenummer: 02017542.8
(22) Anmeldetag: 06.08.2002
(51) Int. Cl.: H04B 7/06, H04B 7/10

(54) **Verfahren zur Datenübertragung**

(71) Anmelder: SIEMENS AKTIENGESELLSCHAFT, 80333 München (DE)
(72) Erfinder: Faerber, Michael, 82515 Wolfratshausen (DE)

(57) **Zusammenfassung**

Die Erfindung betrifft ein Verfahren zur Datenübertragung zwischen einer Basisstation (BTS11) und einem Teilnehmer (TN1) eines Funkkommunikationssystem mit Zeitschlitz-Vielfachzugriffsverfahren. Dabei wird dem Teilnehmer ein erster Datenblock (DB11) mit einer teilnehmerspezifischen ersten Trainingssequenz (TSC11) und ein Zeitschlitz (ZS1) zur Datenblockübertrangung zugeordnet. Erfindungsgemäß wird mindestens ein dem Teilnehmer zugeordneter weiterer Datenblock (DB22) mit einer weiteren teilnehmerspezifischen Trainingssequenz (TSC22) im zugeordneten Zeitschlitz (ZS1) übertragen.

## Beschreibung

Die Erfindung betrifft ein Verfahren zur Datenübertragung zwischen einer Basisstation und einem Teilnehmer eines Funkkommunikationssystem mit Zeitschlitz-Vielfachzugriffsverfahren.

Bei hoch entwickelten und ausgereiften Funkkommunikationssystemen, wie beispielsweise beim GSM-Mobilfunksystem, sind Erhöhungen einer Datenübertragungsrate oder einer durch eine Teilnehmeranzahl bestimmten Systemkapazität nur mehr mit großem Aufwand erreichbar.

Beispielsweise gelingt eine Erhöhung der Systemkapazität eines zellularen Mobilfunknetzes durch Verringerung des sogenannten "Frequenzwiederholungsfaktors" (frequency-reuse), der im Extremfall den Wert "1" annimmt, wodurch benachbarte Funkzellen gleiche Trägerfrequenzen zur Datenübertragung verwenden.

Bei Verringerung des Frequenzwiederholungs faktors gewinnen Interferenzunterdrückungsmaßnahmen, wie sie beispielsweise aus 3GPP TSG-GERAN#9, Seattle, WA, April 15-19,2002, GP-021013, Agenda item 6.3, 7.1.5.9 oder aus 3GPP TSG-GERAN#9, Seattle, USA, April 15-19, 2002, GP-020822, Agenda item 7.1.5.9 bekannt sind, zunehmend an Bedeutung. Mit deren Hilfe wird versucht, bei verringertem Frequenzwiederholungsfaktor Störungen einer gewünschten Datenübertragung zu minimieren bzw. auszuschalten.

Bekannte Interferenzunterdrückungsverfahren führen jedoch bei deren Realisierung in einem Funkkommunikationssystem mit Zeitschlitz-Vielfachzugriffsverfahren, wie beispielsweise dem GSM-Mobilfunksystem, zu einer Reihe von Nachteilen für die Systembetreiber:
- bisher zeitlich unsynchronisierte Funkzellen müssten für deren Anwendung untereinander synchronisiert werden,
- bei einer gewünschten Datenübertragung könnte nur ein sogenannter "signifikanter" Störer (Interferer) aus einer Anzahl von mehreren Störern wirksam berücksichtigt werden,
- bei einem GSM-Mobilfunksystem sind Interferenzunterdrückungsverfahren nur anwendbar, wenn die zu übertragenden Datensignale GMSK- oder 8PSK-moduliert werden und ein Störer zur Interferenzunterdrückung exakt die gleiche Modulation aufweist; ist dies nicht der Fall, ist ein durch Interferenzunterdrückung erzielbarer Gewinn deutlich geringer,
- der zu erzielende Gewinn bei der Systemkapazität ist abhängig von der Anzahl an Funkkommunikationsendgeräten, die die Interferenzunterdrückungsverfahren unterstützen,
- die Interferenzunterdrückungsverfahren werden durch Frequenzabweichungen bei den Trägerfrequenzen benachbarter Basisstationen nachteilig beeinflusst,
- bei Verwendung von Trainingssequenzen bei einer blockweisen Datenübertragung wird eine aufwändige Planung für die Zuordnung der Trainingssequenzen benötigt, und
- für die Erfüllung der vorstehend genannten Randbedingungen wäre eine funktionale Erweiterung von "Radio Ressource Management" -Funktionen bei einer Funktionseinheit (BSC), die mehrere Funkzellen verwaltet, notwendig. Eine derartige Einheit müsste dabei über Parameter beachten, dass beispielsweise nur ein signifikanter Störer entsteht, oder dass bei Funkzellen, die einen gleichen "Frequency-Reuse" - Faktor aufweisen, in entsprechenden Zeitschlitzen gleiche Modulationen verwendet werden.

Es ist daher Aufgabe der vorliegenden Erfindung, bei einem Funkkommunikationssystem mit Zeitschlitz-Vielfachzugriffsverfahren ein Verfahren zur Datenübertragung anzugeben, mit dessen Hilfe bei geringem Aufwand die Datenübertragungsrate bzw. die Teilnehmeranzahl und damit die Systemkapazität des Funkkommunikationssystems erhöht wird.

Die Aufgabe der Erfindung wird durch die Merkmale des Patentanspruchs 1 gelöst. Vorteilhafte Weiterbildungen sind in den Unteransprüchen angegeben.

Beim erfindungsgemäßen Verfahren zur Datenübertragung werden einem Teilnehmer mindestens zwei Datenblöcke sowie ein Zeitschlitz für deren Übertragung zugeordnet, wobei jeder einzelne der mindestens zwei Datenblöcke jeweils eine dem Teilnehmer zugeordnete Trainingssequenz aufweist.

Die mindestens zwei Trainingssequenzen werden netzseitig durch eine Basisstationssteuerung jeder einzelnen Basisstation derart zugewiesen, dass sie untereinander eine vorgegebene Mindestorthogonalität aufweisen. Die Mindestorthogonalität ist notwendig, um die mindestens zwei Datenblöcke empfangsseitig anhand ihrer Kanalimpulsantworten unterscheiden zu können. Mit Hilfe einer Tabelle, die beispielsweise beim sogenannten "Radio-Ressource-Management" angeordnet ist, wird eine optimale Zuordnung der Trainingssequenzen ermöglicht.

Die mindestens zwei Datenblöcke weisen jeweils Nutzdaten auf. Um die Nutzdaten empfangsseitig detektieren zu können, werden die Datenblöcke beispielsweise mit Hilfe einer Diversity-Antennenanordnung abgestrahlt, wodurch jeder Datenblock einen spezifischen Ausbreitungspfad durchläuft.

Bei einer Space-Diversity-Antennenanordnung wird ein erster Datenblock über eine erste Antenne und ein zweiter Datenblock über eine zweite Antenne der Space-Diversity-Antennenanordnung abgestrahlt, während bei einer Polarisations-Diversity-Antennenanordnung der erste Datenblock über eine erste Polarisation und der zweite Datenblock über eine zweite Polarisation der Polarisations-Diversity-Antennenanordnung abgestrahlt wird. Kombinationen daraus sind unter Beibehaltung der spezifischen Ausbreitungspfade möglich.

Das erfindungsgemäße Verfahren zur Datenübertragung kommt bevorzugt bei einem GSM-Mobilfunksystem zur Anwendung.

Das erfindungsgemäße Verfahren zur Datenübertragung ermöglicht eine von den Eigenschaften des Funkkanals abhängige Leistungszuordnung zu den einzelnen Datenblöcken, sowie eine vom Funkkanal abhängig gewählte Nutzdatencodierung.

Durch das erfindungsgemäße Verfahren können beispielsweise sogenannte "circuit- switched-data" bzw. Sprachdaten eines Sprachcodec mit Hilfe eines ersten Datenblocks und "packet-switched-data" bzw. Paketdaten mit Hilfe eines zweiten Datenblocks innerhalb des gleichen Zeitschlitzes zum gleichen Teilnehmer übertragen werden.

Die durch die erfindungsgemäße Verwendung von mindestens zwei Datenblöcken in einem Zeitschlitz zusätzlich eingeführten Interferenzsignale sind a priori bekannt und somit leicht zu berücksichtigen.

Durch das erfindungsgemäße Verfahren wird eine Erhöhung der Systemkapazität erreicht. Wurden bisher benachbarte Zeitschlitze einem Teilnehmer zur Datenübertragung zugeordnet, so werden diese durch das erfindungsgemäße Verfahren jetzt frei und stehen weiteren Teilnehmern zur Verfügung. Die Datenübertragungsrate eines Teilnehmers wird durch das erfindungsgemäße verfahren ebenfalls erhöht.

Eine zeitliche Synchronisation von benachbarten Funkzellen ist entgegen der oben beschriebenen Forderungen nicht mehr notwendig.

Die mindestens zwei Datenblöcke sind sie für ein empfangsseitig durchgeführtes Joint-Detection-Verfahren optimal zueinander synchronisiert, da sie von einer Basisstation gebildet werden und sie Trägerfrequenzvariationen, die innerhalb einer Basisstation auftreten können, gemeinsam unterliegen. Mit Hilfe des erfindungsgemäßen Verfahrens werden Probleme des sogenannten "Nah-Fern-Effekts", wie sie bei Interferenzunterdrückungsverfahren auftreten, vermieden, da hier für die blockweise Datenübertragung eine gleiche Trägerfrequenz und ein gleicher Zeitschlitz innerhalb einer Funkzelle verwendet werden und die einzelnen Datenblöcke des Teilnehmers optimal aufeinander synchronisiert sind.

Bedingt durch Funkkanaleigenschaften wird bei den Datenblöcken deren Leistung nur minimal variiert. Da die Datenblöcke jedoch dem gleichen Teilnehmer zugeordnet sind, kann im zeitlichen Mittel eine gebildete Empfangsleistung als identisch betrachtet werden. Dadurch entfallen sogenannte "Capturing"-Effekte im Empfänger des Teilnehmers. Unter "Capturing" versteht man, dass ein schwächeres Teilnehmersignal (Datenblock) nicht mehr dekodierbar ist, wenn eine Leistungsdifferenz zwischen betrachteten Teilnehmersignalen zu groß wird.

Beim Aufbau einer Datenübertragung bei einem GSM-Mobilfunksystem wird beispielsweise eine Verbindung zwischen einem Teilnehmer und einer Basisstation eingerichtet, indem einem ersten Datenblock eines Teilnehmers eine erste Trainingssequenz zugewiesen wird. Die Zuweisung erfolgt im Downlink von der Basisstation zum Teilnehmer mit Hilfe eines BCCH-Kanals.

Wird durch eine durchgeführte Signalisierung seitens der Basisstation festgestellt, dass beim Teilnehmer ein für die Durchführung des erfindungsgemäßen Verfahrens ausgelegter Joint-Detection-Empfänger vorhanden ist, wird dem Funkkommunikationsendgerät des Teilnehmers über eine spezielle Signalisierung einerseits eine Rahmennummer, ab der das erfindungsgemäße Datenübertragungsverfahren beginnt, und andererseits eine zweite Trainingssequenz mitgeteilt.

Dem Funkkommunikationsendgerät des Teilnehmer wird die Kanalkodierung des zweiten Datenblocks und die dem zweiten Datenblock zugeordnete Leistung mitgeteilt, wobei bedarfsweise diese Leistungsmitteilung auf die Leistung des ersten Datenblocks bezogen erfolgt. Zusätzlich wird noch ein Hinweis darauf übertragen, ob der zweite Datenblock ständig oder nur zeitweise zur Datenübertragung benutzt wird.

Im Folgenden wird ein Ausführungsbeispiel der vorliegenden Erfindung anhand der Zeichnung erläutert. Dabei zeigt:
- FIG 1: ein zellulares Mobilfunksystem gemäß dem Stand der Technik mit einem Nutzsignal und mit Interferenzsignalen,
- FIG 2: eine zeitliche Darstellung von Nutz- und Interferenzsignalen aus FIG 1,
- FIG 3: eine Funkzelle eines Mobilfunksystems, bei der das erfindungsgemäße Verfahren angewendet wird,
- FIG 4: eine zeitliche Darstellung von in FIG 3 dargestellten Datenblöcken, und
- FIG 5: eine Darstellung eines beim erfindungsgemäßen Verfahren verwendeten Zeitschlitzes und eine Übertragung seiner ihm zugeordneten Datenblöcke mit Hilfe einer Antennenanordnung.

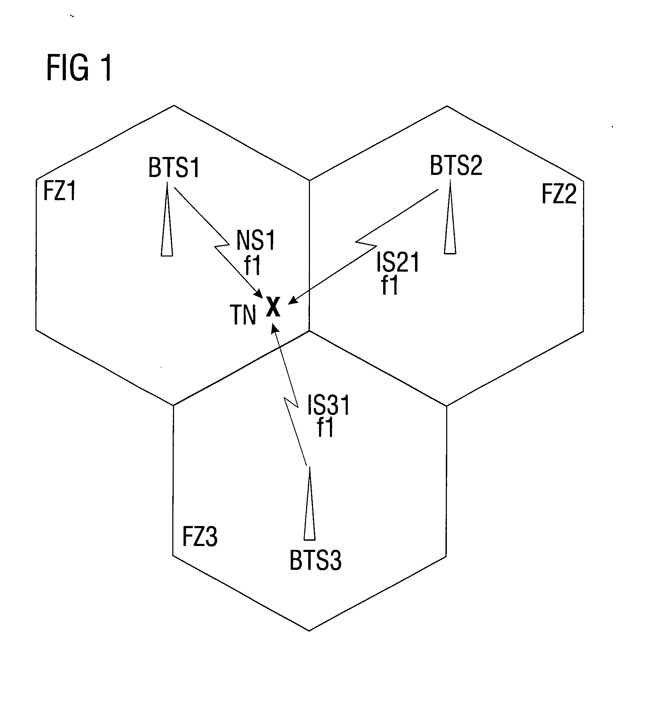

FIG 1 zeigt ein zellulares Mobilfunksystem gemäß dem Stand der Technik mit einem Nutzsignal NS1 und mit zwei Interferenzsignalen IS21 und IS31.

Drei benachbarte Funkzellen FZ1, FZ2 und FZ3, denen jeweils eine Basisstation BTS1, BTS2 bzw. BTS3 zugeordnet ist, übertragen ihre jeweiligen Teilnehmerdaten bei einem Frequency-Reuse Faktor von eins auf einer jeweils gleichen Trägerfrequenz f1.

Bei einem Teilnehmer TN, der einer ersten Funkzelle FZ1 zugeordnet ist, wird aufgrund der gleichen Trägerfrequenz f1 sowohl ein von einer ersten Basisstation BTS1 abgestrahltes Nutzsignal NS1 als auch ein dieses Nutzsignal NS1 störendes erstes Interferenzsignal IS21 einer zweiten Basisstation BTS2 und ein zweites Interferenzsignal IS31 einer dritten Basisstation BTS3 empfangen.

Die in der Beschreibungseinleitung genannten Interferenzunterdrückungsverfahren kommen bei einem derartigen Mobilfunksystem, das beispielsweise nach dem GSM-Standard ausgeprägt ist, zur Anwendung.

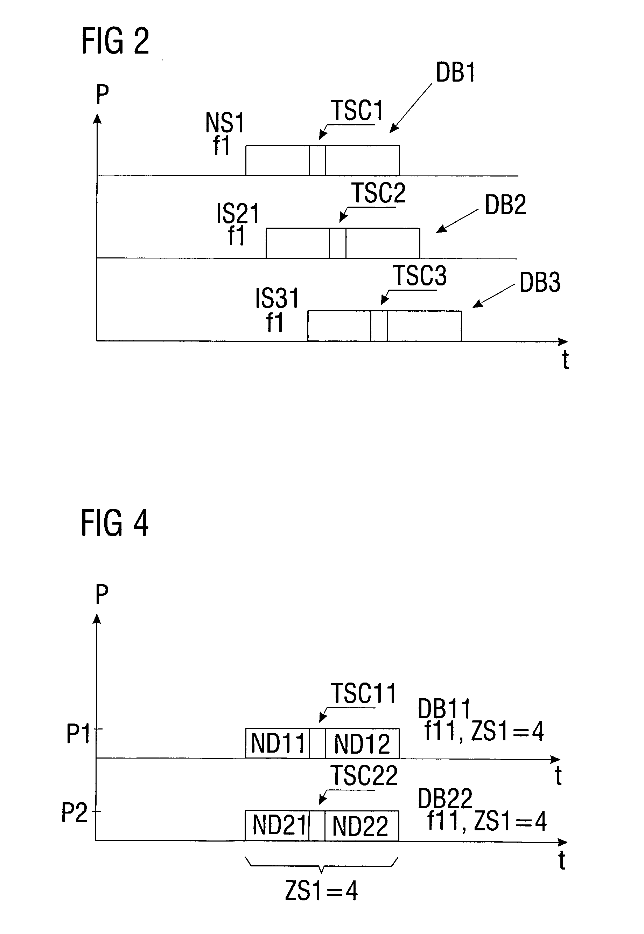

FIG 2 zeigt eine zeitliche Darstellung des Nutzsignals NS1 und der beiden Interferenzsignale IS21 und IS31 aus FIG 1.

Unter der Annahme eines GSM-Mobilfunksystems weist ein Datenblock DB1 des Nutzsignals NS1 eine Trainingssequenz TSC1 auf. Gleiches gilt für Datenblöcke DB2 bzw. DB3 der störenden Interferenzsignale IS21 und IS31, denen jeweils eine entsprechende Trainingssequenz TSC2 bzw. TSC3 zugewiesen ist.

Die beim Teilnehmer TN während eines Zeitintervalls empfangenen Interferenzsignale IS21 und IS31 sowie das Nutzsignal NS1 sind zueinander zeitlich nicht synchronisiert. Da jede der Basisstationen BTS1 bis BTS3 jeweils einen eigenen LokalOszillator zur Erzeugung der Trägerfrequenz f1 aufweist, sind die Trägerfrequenzen f1 der Basisstationen BTS1 bis BTS3 mit einem Frequenz-Offset behaftet und damit ebenfalls nicht synchron zueinander.
Diese fehlende Synchronität erfordert eine aufwändige Ermittlung eines signifikanten Interferenzsignals für ein Interferenzunterdrückungsverfahren.

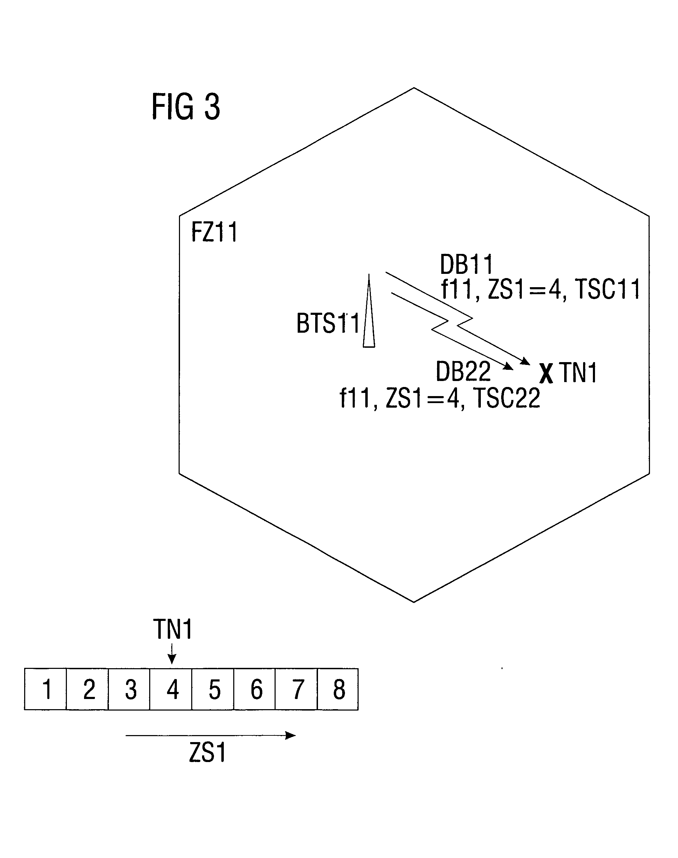

FIG 3 zeigt eine-Funkzelle FZ11 eines Mobil funk systems, bei der das erfindungsgemäße Verfahren zur Datenübertragung angewendet wird.

Für eine Datenübertragung von einer Basisstation BTS11 zu einem Teilnehmer TN1 wird ein erster Datenblock DB11 mit einer dem Teilnehmer TN1 zugeordneten ersten Trainingssequenz TSC11 verwendet, wobei die Übertragung in einem Zeitschlitz ZS1=4 und mit Hilfe einer Trägerfrequenz f11 durchgeführt wird.

Zugleich wird dem Teilnehmer TN1 ein zweiter Datenblock DB22, der eine dem Teilnehmer zugeordnete zweite Trainingssequenz TSC22 aufweist, zugeordnet. Der zweite Datenblock DB22 wird während des gleichen Zeitschlitzes ZS1=4 mit Hilfe der gleichen Trägerfrequenz f11 im Downlink von der Basisstation BTS11 zum Teilnehmer TN1 funkübertragen.

Beim Teilnehmer TN1 ist ein Joint-Detection-Empfänger angeordnet, mit dessen Hilfe Kanalimpulsantworten der beiden Trainingssequenzen TSC11 und TSC22 detektiert und somit die Datenblöcke DB1 und DB22 empfangen werden.

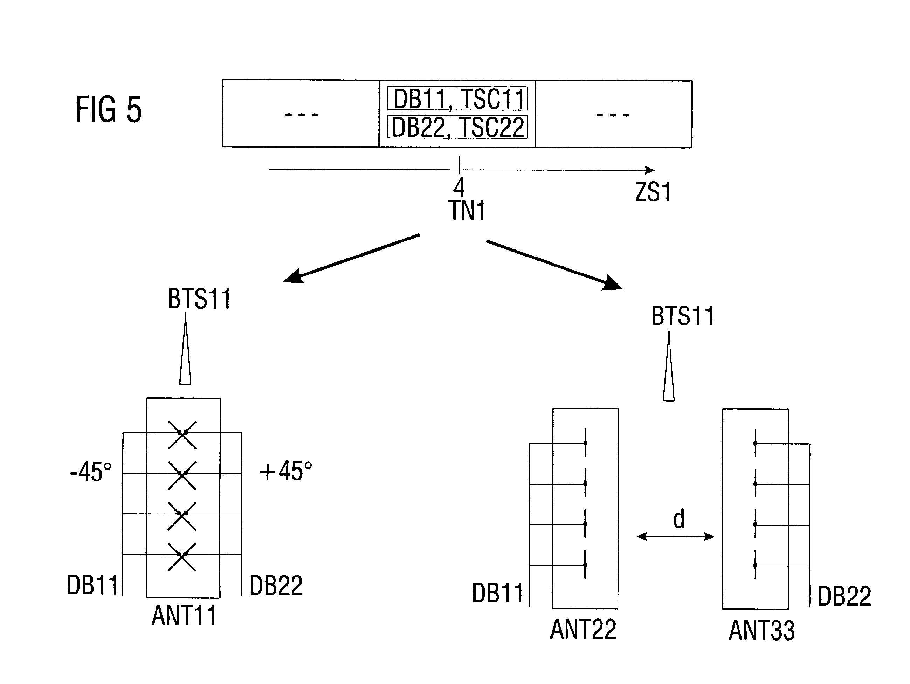

FIG 4 zeigt eine zeitliche Darstellung von in FIG 3 dargestellten Datenblöcken DB1 und DB22.

Der erste Datenblock DB1 weist bei einem GSM-Mobilfunksystem eine erste Trainingssequenz TSC11 auf, die dem Teilnehmer TN1 exklusiv zugeordnet ist. Auf beiden Seiten der Trainingssequenz TSC11 werden Nutzdaten ND11 bzw. ND12 übertragen.

Der zweite Datenblock DB22 weist eine zweite Trainingssequenz TSC22 auf, die ebenfalls dem Teilnehmer TN1 exklusiv zugeordnet ist. Auch hier werden auf beiden Seiten der zweiten Trainingssequenz TSC22 weitere Nutzdaten ND21 bzw. ND22 übertragen.

Die Zuordnung der Trainingssequenzen TSC11 und TSC22 erfolgt netzwerkseitig über die Basisstation BTS11 (siehe FIG 3) bzw. über eine Basisstationssteuerung. Die Trainingssequenzen TSC11 bzw. TSC22 werden derart gewählt, dass beide eine vorgegebene Mindestorthogonalität untereinander aufweisen. Dadurch sind empfangsseitig beim Teilnehmer TN1 die einzelnen zugehörigen Kanalimpulsantworten eindeutig detektierbar.

Da beide Datenblöcke DB11 und DB22 von der gleichen Basisstation BTS11 erzeugt werden, sind sie zueinander sowohl zeitals auch frequenzsynchron. Beide weisen jeweils eine spezifisch zugeordnete Leistung P1 bzw. P2 auf.

FIG 5 eine Darstellung eines beim erfindungsgemäßen Verfahren verwendeten Zeitschlitzes ZS1 und eine Übertragung seiner ihm zugeordneten Datenblöcke DB11 und DB22 mit Hilfe einer Antennenanordnung ANT.

Mit Hilfe des Zeitschlitzes ZS1=4, dem der erste Datenblock DB11 mit der ersten Trainingssequenz TSC11 und der zweite Datenblock DB22 mit der zweiten Trainingssequenz TSC22 zugeordnet ist, erfolgt eine Funkübertragung von Daten an den Teilnehmer TN1.

Dabei erfolgt in einem ersten Beispiel die Funkübertragung mit Hilfe einer Polarisations-Diversity-Antenneneinrichtung, die eine Antenne ANT11 beinhaltet.

Für eine korrekte Detektion müssen die Nutzdaten ND11 bis ND22 zueinander eine gewisse Orthogonalität aufweisend. Dies wird realisiert, indem beispielsweise ein erster Datenblock DB11 seitens der Basisstation BTS11 an eine erste Polarisation der Antenne ANT11 geführt wird, während ein zweiter Datenblock DB22 an eine zweite Polarisation der Antenne ANT11 geführt wird.

Dabei weist bezogen auf eine Senkrechte die erste Polarisation um +45° geneigte Dipole auf, während die zweite Polarisation um -45° geneigte Dipole aufweist. Es sind auch entsprechend andere Polarisationsebenen möglich, beispielsweise horizontale und vertikale Polarisation.

Die beiden Datenblöcke DB11 und DB22 werden entsprechend polarisiert abgestrahlt und gelangen über verschiedene Ausbreitungspfade an den Teilnehmer TN1 zur Detektion.

In einem zweiten Beispiel erfolgt die Funkübertragung mit Hilfe einer Space-Diversity-Antenneneinrichtung, die zwei gleichpolarisierte Antennen ANT22 und ANT33 beinhaltet.

Der erste Datenblock DB11 gelangt hier an eine erste Antenne ANT22, während der zweite Datenblock DB22 an eine zweite Antenne ANT33 der Space-Diversity-Antenneneinrichtung zur gleichpolarisierten Abstrahlung gelangt.

Die beiden Antennen ANT22 und ANT33, die an der Basisstation BTS11 angeordnet sind, weisen einen Abstand d zueinander auf, der so gewählt wird, dass die funkübertragenen Datenblöcke DB11 und DB22 voneinander unterscheidbare Ausbreitungspfade aufweisen. Dadurch wird wiederum eine Orthogonalität für eine korrekte Detektion der Nutzdaten ND11 bis ND22 realisiert.

Für das erfindungsgemäße Verfahren zur Datenübertragung sind verschiedene Anwendungen denkbar.

Bei einer ersten Anwendung werden beide Datenblöcke DB11 und DB22 ständig parallel zueinander übertragen. Dadurch können Daten während eines Zeitschlitzes übertragen werden, die gemäß dem Stand der Technik bisher auf aufeinanderfolgende Zeitschlitze verteilt übertragen wurden - beispielsweise HSCSD-Daten bzw. SIP-Signalisierungsdaten.

SIP-Signalisierungsdaten werden bei einem IMS-Service (Internet Multimedia Service) benötigt, der gemäß den 3G-Mobile-Radio-Vorschriften ständig Kapazitäten zur Übertragung von Signalisierungsdaten benötigt.

Bei einem GSM-Mobilfunksystem gemäß dem Stand der Technik sind zwar genügend Kapazitäten zur Sprachübertragung bzw. zur Übertragung von kodierten Daten vorhanden, jedoch fehlen Kapazitäten für eine Übertragung von SIP-Signalisierungsdaten.

Da die SIP-Signalisierungsdaten nicht ständig übertragen werden, wird beim erfindungsgemäßen Verfahren zur Datenübertragung der Joint-Detection-Empfänger beim Teilnehmer sowie die Basisstation entsprechend gesteuert. Liegen keine SIP-Signalisierungsdaten an, so bleibt der zweite Datenblock für eine gewünschte Übertragung bereit, eine Zuweisung von weiteren Übertragungskapazitäten bzw. von aufeinanderfolgenden Zeitschlitzen entfällt.

Es werden sogenannte "High-Wideband-AMR" codierte Signale, die einen großen Bedarf an "Payload" benötigen, unterstützt. Hohe Klassen des Wideband-AMR haben beispielsweise einen "Payload"-Bedarf von mindestens zwei Zeitschlitzen, der es wird die Verwendung der sogenannten 8PSK-Modulation erforderlich. Eine Einführung von Wideband-AMR-Signalen, die nicht 8 PSK-EDGE-moduliert sind, wird innerhalb des GSM-Mobilfunksystems ermöglicht.

In einer weiteren Anwendung werden mit Hilfe des zweiten Datenblocks Parameter übertragen, die beispielsweise von übertragenen Nachrichten innerhalb des ersten Datenblocks gesetzt bzw. zurückgesetzt werden. Eine Trainingssequenz wird beispielsweise verlängert bzw. es wird die Kanalcodierung der Nutzdaten variabel gestaltet. Mit Hilfe einer längeren Trainingssequenz wird die Detektion des entsprechenden Teilnehmersignals vereinfacht. Eine Positionsbestimmung des Teilnehmers ist mit einer verlängerten Trainingssequenz mit großer Genauigkeit realisierbar. Die Trainingssequenzen weisen gegebenenfalls voneinander unterschiedliche Längen und Inhalte auf.

In einer weiteren Anwendung wird mit Hilfe des ersten Datenblocks eine spezielle Trainingssequenz und eine spezielle Kanalkodierung der zu übertragenden Nutzdaten angezeigt, die abhängig von den Funkkanaleigenschaften gewählt wird. Bei entsprechenden Funkkanaleigenschaften wird eine geringe Übertragungsrate mit einer robusten Kanalcodierung verwendet. Dadurch kann nun andererseits die Sendeleistung des entsprechenden Datenblocks entsprechend reduziert werden. Dadurch wird zum einen die Detektion verbessert und zum anderen werden Interferenzen aufgrund der reduzierten Leistung minimiert bzw. vermieden.

Aufgrund der Leistungsreduzierung und der einhergehenden Interferenzvermeidung ist eine Verringerung des Frequency-Reuse-Faktors möglich, wodurch die Kapazität des Funkkommunikationsnetzwerks zunimmt.

## Patentansprüche

1. Verfahren zur Datenübertragung zwischen einer Basisstation (BTS11) und einem Teilnehmer (TN1 eines Funkkommunikationssystems mit Hilfe eines Zeitschlitz-Vielfachzugriffsverfahren, bei dem einem Teilnehmer (TN1) ein erster Datenblock (DB11) mit einer teilnehmerspezifischen ersten Trainingssequenz (TSC11) und ein Zeitschlitz (ZS1) zur Datenblockübertragung zugeordnet wird,
**dadurch gekennzeichnet,**
**dass** mindestens ein dem Teilnehmer (TN1) zugeordneter weiterer Datenblock (DB22) mit einer weiteren teilnehmerspezifischen Trainingssequenz (TSC22) im zugeordneten Zeitschlitz (ZS1) übertragen wird.

2. Verfahren nach Anspruch 1, **dadurch gekennzeichnet, dass**
die Trainingssequenzen (TSC11, TSC22) der mindestens zwei Datenblöcke (DB11, DB22) anhand einer vorgegebenen Mindestorthogonalität netzwerkseitig von einer Basisstationssteuerung der Basisstation (BTS11) zugeordnet werden.

3. Verfahren nach Anspruch 1 oder 2, **dadurch gekennzeichnet,**
**dass** jeder einzelne der mindestens zwei Datenblöcke (TB11, DB22) über jeweils eine dem jeweiligen Datenblock (DB11, DB22) zugeordnete Antenne (ANT22, ANT33) einer Space-Diversity-Antennenanordnung polarisationsgleich abgestrahlt wird.

4. Verfahren nach Anspruch 1 oder 2, **dadurch gekennzeichnet, dass** jeder einzelne der mindestens zwei Datenblöcke (DB11, DB22) über jeweils eine dem jeweiligen Datenblock (DB11, DB22) zugeordnete Polarisation (+45°, -45°) einer Polarisations-Diversity-Antennenanordnung (ANT11) abgestrahlt wird.

5. Verfahren nach einem der vorhergehenden Ansprüche, **dadurch gekennzeichnet, dass** Basisstationen des Funkkommunikationssystems untereinander zeitlich nicht synchronisiert werden.

6. Verfahren nach einem der vorhergehenden Ansprüche, **dadurch gekennzeichnet, dass** als Funkkommunikationssystem ein GSM-Mobilfunksystem verwendet wird.

7. Verfahren nach einem der vorhergehenden Ansprüche, **dadurch gekennzeichnet, dass** die Übertragung der mindestens zwei Datenblöcke (DB11, DB22) im Downlink von der Basisstation (BTS11) zum Teilnehmer (TN1) durchgeführt wird.

8. Verfahren nach einem der vorhergehenden Ansprüche, **dadurch gekennzeichnet, dass** mit Hilfe der mindestens zwei Datenblöcke (DB11, DB22) kanalcodierte Nutzdaten (ND11, ND12, ND21, ND22) über einen Funkkanal übertragen werden, deren Kanalcodierung abhängig von den Übertragungseigenschaften des Funkkanals eingestellt wird.

9. Verfahren nach einem der vorhergehenden Ansprüche, **dadurch gekennzeichnet, dass** jeder einzelne der mindestens zwei Datenblöcke (DB11 DB22) mit einer individuellen, von den Übertragungseigenschaften des Funkkanals abhängigen Sendeleistung (P1, P2) übertragen wird.

10. Verfahren nach einem der vorhergehenden Ansprüche, **dadurch gekennzeichnet, dass** den Trainingssequenzen (TSC11, TSC22) unterschiedliche variable Längen und Inhalte zugewiesen werden.
